(19) Europäisches Patentamt
European Patent Office
Office européen des brevets

(11) EP 4 270 529 A1

(12) EUROPEAN PATENT APPLICATION
published in accordance with Art. 153(4) EPC

(43) Date of publication:
01.11.2023 Bulletin 2023/44

(21) Application number: 21910254.8

(22) Date of filing: 06.12.2021

(51) International Patent Classification (IPC):
H01M 4/131 (2010.01)        H01M 4/525 (2010.01)
H01M 10/052 (2010.01)

(52) Cooperative Patent Classification (CPC):
H01M 4/131; H01M 4/525; H01M 10/052;
Y02E 60/10

(86) International application number:
PCT/JP2021/044687

(87) International publication number:
WO 2022/138104 (30.06.2022 Gazette 2022/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.12.2020 JP 2020217186

(71) Applicant: Panasonic Intellectual Property
Management Co., Ltd.
Osaka-shi, Osaka 540-6207 (JP)

(72) Inventors:
• AOKI, Yoshinori
  Kadoma-shi, Osaka 571-0057 (JP)
• OGASAWARA, Takeshi
  Kadoma-shi, Osaka 571-0057 (JP)
• FUJITANI, Naoya
  Kadoma-shi, Osaka 571-0057 (JP)

(74) Representative: Novagraaf International SA
Chemin de l'Echo 3
1213 Onex, Geneva (CH)

(54) NONAQUEOUS ELECTROLYTE SECONDARY BATTERY

(57) A nonaqueous electrolyte secondary battery according to one embodiment of the present disclosure is provided with a positive electrode, a negative electrode and a nonaqueous electrolyte; and the positive electrode contains a lithium-transition metal composite oxide that has a layered structure, while containing at least Ni and Mo. With respect to the lithium-transition metal composite oxide, the content of Ni is from 80% by mole to 95% by mole relative to the total number of moles of metal elements excluding Li, and the content of Mo is less than 3% by mole relative to the total number of moles of metal elements excluding Li. The negative electrode comprises a negative electrode mixture layer that contains a negative electrode active material, and a coating film that is formed on the surface of the negative electrode mixture layer, while containing Mo. The content of Mo in the negative electrode is from 0.5 ppm to 120 ppm relative to the total mass of the lithium-transition metal composite oxide in the positive electrode.

Figure 1

EP 4 270 529 A1

**EP 4 270 529 A1**

**Description**

TECHNICAL FIELD

The present disclosure relates to a non-aqueous electrolyte secondary battery, and more particularly to a non-aqueous electrolyte secondary battery including, as a positive electrode active material, a lithium transition metal composite oxide containing Ni.

BACKGROUND

In recent years, lithium-transition metal composite oxides with a high Ni content have attracted attention as positive electrode active materials having a high energy density. For example, Patent Literature 1 discloses a positive electrode active material composed of a lithium transition metal composite oxide represented by general formula $Li_xNi_{1-y-z-v-w}Co_yAl_zM^1_vM^2_wO_2$, where the element $M^1$ is at least one selected from Mn, Ti, Y, Nb, Mo, and W, and the element $M^2$ is at least Mg or Ca. Further, Patent Literature 2 discloses a lithium transition metal composite oxide containing Ni, Mn, and Co, in which at least one selected from Mo, W, Nb, Ta, and Re is contained.

CITATION LIST

PATENT LITERATURE

PATENT LITERATURE 1: Japanese Unexamined Patent Application Publication No. 2006-310181
PATENT LITERATURE 2: Japanese Unexamined Patent Application Publication No.

SUMMARY

TECHNICAL PROBLEM

In a lithium transition metal composite oxide, when the content of Ni is 80 mol% or more, the structure of the composite oxide becomes unstable, and side reactions with the electrolyte tend to occur at the surface of the composite oxide particles. For this reason, a large amount of decomposition products of the electrolyte is generated, and it is considered that due to a film made of the decomposition products being formed on the negative electrode surface, the charge-discharge cycle characteristic of the battery is deteriorated. The techniques disclosed in Patent Literature 1 and 2 still have room for improvement in terms of cycle characteristic.

An object of the present disclosure is to suppress a decrease in capacity occurring in connection with charging and discharging in a non-aqueous electrolyte secondary battery that uses, as a positive electrode active material, a lithium transition metal composite oxide with a high Ni content.

SOLUTION TO PROBLEM

A non-aqueous electrolyte secondary battery according to one aspect of the present disclosure includes a positive electrode, a negative electrode, and a non-aqueous electrolyte. The positive electrode contains a lithium transition metal composite oxide having a layered structure and containing at least Ni and Mo. In the lithium transition metal composite oxide, the content of Ni is 80 mol% to 95 mol% relative to a total number of moles of metal elements excluding Li, and the content of Mo is less than 3 mol% relative to the total number of moles of metal elements excluding Li. The negative electrode includes a negative electrode mixture layer containing a negative electrode active material, and a film formed on a surface of the negative electrode mixture layer and containing Mo. The content of Mo in the negative electrode is 0.5 ppm to 120 ppm relative to a total mass of the lithium transition metal composite oxide in the positive electrode.

ADVANTAGEOUS EFFECTS OF INVENTION

According to one aspect of the present disclosure, in a non-aqueous electrolyte secondary battery that uses a lithium transition metal composite oxide with a high Ni content as a positive electrode active material, it is possible to suppress a decrease in capacity occurring in connection with charging and discharging. A non-aqueous electrolyte secondary battery according to the present disclosure has an excellent charge-discharge cycle characteristic.

BRIEF DESCRIPTION OF DRAWINGS

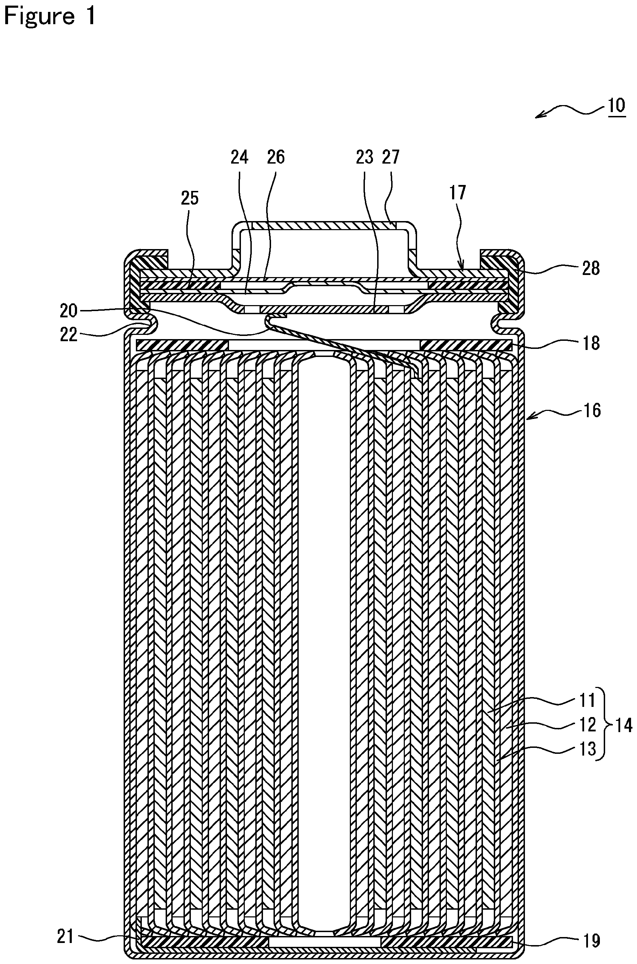

[FIG. 1] FIG. 1 is a cross-sectional view of a non-aqueous electrolyte secondary battery according to an example embodiment.

DESCRIPTION OF EMBODIMENTS

As described above, a lithium transition metal composite oxide with a high Ni content has high activity at the surface of the lithium transition metal composite oxide particles, and the structure of the particle surface is unstable. For this reason, degradation of the layered structure starting from the surface is likely to proceed, and this is thought to cause deterioration of the charge-discharge cycle characteristic of the battery. The present inventors have found that the charge-discharge cycle characteristic is improved by using a lithium transition metal composite oxide containing a predetermined amount of Mo and thereby suppressing, in the positive electrode, formation and erosion of a structurally degraded layer at the surface of the lithium transition metal composite oxide due to reaction with the electrolyte solution or the like, and also forming, on the surface of the negative electrode, a good quality film containing Mo derived from the positive electrode.

When a conventional lithium transition metal composite oxide is used, a film containing a large amount of Li is likely to be formed on the surface of the negative electrode by decomposition products of the electrolyte, and it is presumed that this film contributes to deterioration of the charge-discharge cycle characteristic. In a non-aqueous electrolyte secondary battery according to the present disclosure, formation of this film is suppressed, and instead a good quality film containing Mo is formed on the negative electrode surface, which is considered to significantly improve the charge-discharge cycle characteristic.

In the present specification, the expression "numerical value (A) to numerical value (B)" means "numerical value (A) or more and numerical value (B) or less".

A detailed description will now be given regarding an example embodiment according to the present disclosure of a positive electrode active material for non-aqueous electrolyte secondary battery and a non-aqueous electrolyte secondary battery that uses this positive electrode active material. Although a cylindrical battery in which a spiral-type electrode assembly 14 is housed in a bottomed cylindrical outer can 16 is described below as an example, the outer housing is not limited to a cylindrical outer can, and may for example be an outer can having a rectangular shape, or may be an outer housing made of a laminate sheet including a metal layer and a resin layer. Further, the electrode assembly may be a laminate-type electrode assembly in which a plurality of positive electrodes and a plurality of negative electrodes are alternately laminated via separators.

FIG. 1 is a cross-sectional view of a non-aqueous electrolyte secondary battery 10 according to an example embodiment. As shown for example in FIG. 1, the non-aqueous electrolyte secondary battery 10 comprises a spiral-type electrode assembly 14, a non-aqueous electrolyte, and an outer can 16 that houses the electrode assembly 14 and the electrolyte. The electrode assembly 14 includes a positive electrode 11, a negative electrode 12, and separators 13, and has a spiral structure in which the positive electrode 11 and the negative electrode 12 are wound in a spiral shape with the separators 13 interposed between these electrodes. The outer can 16 is a bottomed cylindrical metal container having an opening on one side in the axial direction, and the opening of the outer can 16 is closed by a sealing assembly 17. In the following, for convenience of explanation, the sealing assembly 17 side of the battery will be referred to as the top, and the bottom portion side of the outer can 16 will be referred to as the bottom.

The non-aqueous electrolyte contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. The non-aqueous solvent may contain a halogen-substituted product obtained by substituting at least a part of hydrogens in the above solvents with halogen atoms such as fluorine. As the electrolyte salt, for example, a lithium salt such as $LiPF_6$ is used. The electrolyte is not limited to a liquid electrolyte, and may be a solid electrolyte that uses a gel polymer or the like.

The positive electrode 11, the negative electrode 12, and the separators 13, which constitute the electrode assembly 14, are all long strip-shaped members, and are alternately laminated in the radial direction of the electrode assembly 14 by being wound in a spiral shape. The negative electrode 12 is formed to have a size somewhat larger than that of the positive electrode 11 in order to prevent precipitation of lithium. That is, the negative electrode 12 is formed longer than the positive electrode 11 in the lengthwise direction and in the widthwise direction (i.e., the shorter direction). The two separators 13 are formed somewhat larger than at least the positive electrode 11, and are, for example, arranged so as to sandwich the positive electrode 11. The electrode assembly 14 has a positive electrode lead 20 connected to the positive electrode 11 by welding or the like, and a negative electrode lead 21 connected to the negative electrode 12 by welding or the like.

Insulation plates 18 and 19 are respectively arranged above and below the electrode assembly 14. In the example shown in FIG. 1, the positive electrode lead 20 extends through a through hole in the insulation plate 18 and toward the sealing assembly 17, while the negative electrode lead 21 extends outside the insulation plate 19 and toward the bottom portion of the outer can 16. The positive electrode lead 20 is connected to the lower surface of an internal terminal plate 23 of the sealing assembly 17 by welding or the like, and a cap 27, which is the top plate of the sealing assembly 17 electrically connected to the internal terminal plate 23, serves as the positive electrode terminal. The negative electrode lead 21 is connected to the inner surface of the bottom portion of the outer can 16 by welding or the like, and the outer can 16 serves as the negative electrode terminal.

A gasket 28 is provided between the outer can 16 and the sealing assembly 17 so as to ensure airtightness inside the battery. The outer can 16 has formed thereon a grooved portion 22, in which a part of a side surface portion protrudes inward and supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and an opening end portion of the outer can 16 which is crimped to the sealing assembly 17.

The sealing assembly 17 has a structure obtained by laminating, in order from the electrode assembly 14 side, the internal terminal plate 23, a lower valve member 24, an insulation member 25, an upper valve member 26, and the cap 27. Each of the members constituting the sealing assembly 17 has, for example, a disk shape or a ring shape, and the respective members except the insulation member 25 are mutually electrically connected. The lower valve member 24 and the upper valve member 26 are connected to each other at their central portions, and the insulation member 25 is interposed between peripheral edge portions of these valve members. When the internal pressure of the battery increases due to abnormal heat generation, the lower valve member 24 deforms and ruptures in a manner pushing up the upper valve member 26 toward the cap 27, and the current path between the lower valve member 24 and the upper valve member 26 is thereby cut off. When the internal pressure increases further, the upper valve member 26 ruptures, and gas is discharged from an opening in the cap 27.

A detailed description will now be given regarding the positive electrode 11, the negative electrode 12, and the separators 13, which constitute the electrode assembly 14, and in particular regarding the positive electrode active material constituting the positive electrode 11.

[Positive Electrode]

The positive electrode 11 comprises a positive electrode core and a positive electrode mixture layer provided on a surface of the positive electrode core. As the positive electrode core, it is possible to use: a foil of a metal, such as aluminum, that is stable in the potential range of the positive electrode 11; a film having such a metal disposed on its surface layer; and the like. The positive electrode mixture layer contains a positive electrode active material, a binder, and a conductive material, and is preferably provided on both sides of the positive electrode core in areas other than a portion where the positive electrode lead 20 is connected. The positive electrode 11 can be produced by, for example, applying a positive electrode mixture slurry containing the positive electrode active material, the binder, the conductive material, and the like onto the surfaces of the positive electrode core, drying the applied coating, and then compressing the coating to thereby form positive electrode mixture layers on both sides of the positive electrode core.

Examples of the conductive material contained in the positive electrode mixture layer include carbon materials such as carbon black, acetylene black, Ketjen black, carbon nanotubes (CNTs), graphene, and graphite. Examples of the binder contained in the positive electrode mixture layer include fluororesins such as polytetrafluoroethylene (PTFE) and polyvinylidene fluoride (PVdF), polyacrylonitrile (PAN), polyimides, acrylic resins, and polyolefins. These resins may be used in combination with a cellulose derivative such as carboxymethyl cellulose (CMC) or a salt thereof, polyethylene oxide (PEO), and the like.

The positive electrode 11 contains a lithium transition metal composite oxide having a layered structure and containing at least Ni and Mo. In the following, for convenience of explanation, this lithium transition metal composite oxide will be referred to as "the composite oxide (Z)". The composite oxide (Z) functions as the positive electrode active material. The positive electrode active material contains the composite oxide (Z) as the main component, and may substantially be composed of the composite oxide (Z) alone. It is noted that the positive electrode active material may contain composite oxides other than the composite oxide (Z) or other compounds within a range that does not impair the object of the present disclosure. Examples of the layered structure of the composite oxide (Z) include a layered structure belonging to the space group R-3m and a layered structure belonging to the space group C2/m. Among these, a layered structure belonging to the space group R-3m is preferable in terms of achieving high capacity, stability of crystal structure, and the like.

The composite oxide (Z) is, for example, secondary particles formed by agglomeration of a plurality of primary particles. The particle size of the primary particles is generally 0.05 μm to 1 μm. The volume-based median diameter (D50) of the composite oxide (Z) is, for example, 3 μm to 30 μm, and preferably 5 μm to 25 μm. D50 means a particle size at which, in a volume-based particle size distribution, the cumulative frequency from the smaller particle size side reaches 50 %, and is also called a mid-level diameter. The particle size distribution of the composite oxide (Z) can be measured using a laser diffraction particle size distribution measuring device (e.g., MT3000II manufactured by MicrotracBEL Corp.), and using water as a dispersion medium.

The composite oxide (Z) contains Ni in an amount of 80 mol% to 95 mol % relative to the total number of moles of metal elements excluding Li. By setting the Ni content to 80 mol% or more, a battery with high energy density can be obtained. Meanwhile, when the Ni content exceeds 95 mol%, the content of Mo and other metal elements becomes too low, so that stability of the layered structure of the composite oxide (Z) cannot be achieved, and formation and erosion of a structurally degraded layer at the surface of the composite oxide (Z) cannot be suppressed. The Ni content may be 85 mol% or more, or 90 mol% or more. It is noted that when the content of Ni in a composite oxide is 80 mol% or more, the structure of the composite oxide becomes unstable, and side reactions with the electrolyte tend to occur at the surface of the composite oxide particles.

The content of Mo in the composite oxide (Z) relative to the total number of moles of metal elements excluding Li is less than 3 mol%, preferably 2 mol% or less, and more preferably 1 mol% or less. When the Mo content is 3 mol% or more, the layered structure of the composite oxide (Z) becomes unstable, and the charge-discharge cycle characteristic becomes deteriorated. Although the lower limit value of the Mo content in the composite oxide (Z) is not particularly limited, it is, for example, 0.05 mol%. The Mo content is preferably 0.1 mol% or more, more preferably 0.5 mol% or more, and particularly preferably 1 mol% or more. In that case, the effect of improving the charge-discharge cycle characteristic is exhibited more notably.

Mo contained in the composite oxide (Z) suppresses, in the positive electrode, formation and erosion of a structurally degraded layer at the surface of the composite oxide (Z) due to reaction with the electrolyte solution or the like. It is considered that Mo having a high valency retains oxygen contained in the layered structure of the composite oxide (Z) during charging and discharging, and suppresses oxygen release. Further, Mo contained in the composite oxide (Z) serves as a Mo source for the film formed on the negative electrode surface. Part of the Mo is eluted due to charging and discharging, deposited on the negative electrode surface, and included into the film on the negative electrode. In the composite oxide (Z), Mo may be present in the layered structure in the form of a solid solution, or may be present at the surface of the primary particles or the secondary particles. When Mo is present at the surface of the primary particles or the secondary particles of the composite oxide (Z), the Mo may be combined with other elements such as Li to form a compound. The amount of solid solution of Mo can be measured by an inductively coupled plasma atomic emission spectrometer (ICP-AES), an electron probe microanalyzer (EPMA), an energy dispersive X-ray spectrometer (EDX), or the like.

The composite oxide (Z) may contain metal elements other than Li, Ni, and Mo. Examples of these metal elements include Mn, Co, Al, Zr, B, Mg, Fe, Cu, Zn, Sn, Na, K, Ca, Sr, Ba, Nb, W, Mo, and Si. Among these, the composite oxide (Z) preferably contains at least one of Al and Mn. Since neither of Al and Mn undergoes a change in oxidation number during charging and discharging, it is considered that the layered structure of the transition metal layer is thereby stabilized. The content of Al is preferably 1 to 10 mol% relative to the total number of moles of metal elements excluding Li, and the content of Mn is preferably 3 to 20 mol% relative to the total number of moles of metal elements excluding Li.

The composite oxide (Z) may further contain at least one of W and Zr. The state in which W or Zr is present in the composite oxide (Z) is not particularly limited. For example, W or Zr may be present at the surface of the primary particles and the surface of the secondary particles of the composite oxide (Z), or may be dissolved in the composite oxide (Z) in the form of a solid solution.

An example of a suitable composite oxide (Z) is a composite oxide represented by general formula $Li_aNi_bMo_cM_dO_{2-e}$ (where $0.8 \leq a \leq 1.2$, $0.80 \leq b \leq 0.95$, $0 < c < 0.03$, $0.02 < d < 0.20$, $0 \leq e \leq 0.05$, and $b+c+d = 1$). Preferably, $0.83 \leq b \leq 0.95$ and $0.001 \leq c \leq 0.02$, and more preferably $0.85 \leq b \leq 0.94$ and $0.001 \leq c \leq 0.01$.

The content of each element constituting the composite oxide (Z) can be measured by an inductively coupled plasma atomic emission spectrometer (ICP-AES), an electron probe microanalyzer (EPMA), an energy dispersive X-ray spectrometer (EDX), or the like.

The crystallite size s of the composite oxide (Z), which is calculated by the Scherrer equation from the half width of the diffraction peak of the (104) plane in an X-ray diffraction pattern obtained by X-ray diffraction, is preferably in the range from 250 Å to 800 Å in terms of increasing battery capacity and improving battery output characteristics.

The X-ray diffraction pattern is obtained by a powder X-ray diffractometry under the following conditions using a powder X-ray diffractometer (manufactured by Rigaku Corporation, product name "RINT-TTR", using Cu-K$\alpha$ radiation source).

    Measurement Range: 15 to 120 °
    Scan Speed: 4 °/min
    Analysis Range: 30 to 120 °
    Background: B-spline
    Profile Function: Split-type pseudo-Voigt function
    Constraint Conditions: Li(3a) + Ni(3a) = 1

Ni(3a) + Ni(3b) = $\alpha$ ($\alpha$ is the Ni content ratio in each case) ICSD No.: 98-009-4814

The Scherrer equation is expressed by the following formula. In the following formula, s is the crystallite size, $\lambda$ is the X-ray wavelength, B is the half width of the diffraction peak of the (104) plane, $\theta$ is the diffraction angle (rad), and K is the Scherrer constant. In the present embodiment, K is set to 0.9.

$$s = K\lambda / B \cos\theta$$

The BET specific surface area of the composite oxide (Z) is preferably in the range from 1 $m^2/g$ to 5 $m^2/g$. When the composite oxide (Z) has the above-described composition and also has a BET specific surface area within this range, energy density of the positive electrode can be improved. The BET specific surface area can be measured, for example, by a commercially available measurement device such as Macsorb's HM model-1201.

The composite oxide (Z) can be synthesized by, for example, mixing a transition metal oxide containing Ni, Co, Mn, Al, etc., a Mo raw material, and a Li raw material such as lithium hydroxide (LiOH), and firing the mixture. In each case where Zr, Ti, Nb, Ca, or the like is to be included in the composite oxide (Z), a Zr raw material such as $ZrO_2$, a Ti raw material such as $TiO_2$, a Nb raw material such as $Nb_2O_5 \cdot nH_2O$, a Ca raw material such as $Ca(OH)_2$, or the like may be mixed and fired together with the above-noted transition metal oxide, Mo raw material, and Li raw material. The composite oxide (Z) may alternatively be synthesized by: mixing a transition metal oxide containing Ni, Co, Mn, Al, etc., a Mo raw material, and additionally a Zr raw material, Ti raw material, Nb raw material, Ca raw material, or the like; firing the mixture to synthesize a composite oxide containing Ni, Mo, etc.; and subsequently adding a Li raw material thereto and firing again.

The firing involves a multi-step firing process including: a first firing step of firing at a first heating rate up to a first set temperature not lower than 450 °C and not higher than 680 °C in a firing furnace under an oxygen stream; and a second firing step of firing the fired product, which has been obtained by the first firing step, at a second heating rate up to a second set temperature above 680 °C and not higher than 800 °C in a firing furnace under an oxygen stream. Here, the first heating rate is in the range of 1.5 °C/min or higher and 5.5 °C/min or lower, while the second heating rate is lower than the first heating rate and is in the range of 0.1 °C/min or higher and 3.5 °C/min or lower. By means of this multi-step firing, in the lithium transition metal oxide of the present embodiment obtained as a result, parameters such as the crystallite size of the lithium transition metal composite oxide as calculated by the Scherrer equation from the half width of the diffraction peak of the (104) plane, the BET specific surface area, the amount of Mo supplied to the negative electrode, and the like can be adjusted to within the above predetermined ranges.

In terms of adjusting the above parameters of the lithium transition metal oxide to within the above predetermined ranges, the first set temperature in the first firing step may be in the range of 450 °C or higher and 680 °C or lower, but is preferably in the range of 550 °C or higher and 680 °C or lower. Further, in terms of adjusting the above parameters of the lithium transition metal oxide to within the above predetermined ranges, the first heating rate in the first firing step may be in the range of 1.5 °C/min or higher and 5.5 °C/min or lower, but is preferably in the range of 2.0 °C/min or higher and 5.0 °C/min or lower. A plurality of first heating rates may be set respectively for separate temperature regions so long as those first heating rates are within the above-noted range. The firing start temperature (or initial temperature) of the first firing step is, for example, in the range from room temperature to not higher than 200 °C.

The holding time of the first set temperature in the first firing step is preferably 0 hour or more and 5 hours or less, and more preferably 0 hour or more and 3 hours or less, in terms of adjusting the above parameters of the lithium transition metal oxide to within the above predetermined ranges. The holding time of the first set temperature is the length of time during which the first set temperature is maintained after the first set temperature is reached.

In terms of adjusting the above parameters of the lithium transition metal oxide to within the above predetermined ranges, the second set temperature in the second firing step may be in the range above 680 °C and not higher than 800 °C, but is preferably in the range of 680 °C or higher and 750 °C or lower. In terms of adjusting the above parameters of the lithium transition metal oxide to within the above predetermined ranges, the second heating rate in the second firing step is lower than the first heating rate, and may be in the range of 0.1 °C/min or higher and 3.5 °C/min or lower, but is preferably in the range of 0.2 °C/min or higher and 2.5 °C/min or lower. A plurality of second heating rates may be set respectively for separate temperature regions so long as those second heating rates are within the above-noted range. For example, when the first set temperature is below 680 °C, the second heating rate may be set dividedly to a heating rate A which applies from the first set temperature to 680 °C, and to a heating rate B which applies from 680 °C to the second set temperature. The heating rate B is preferably lower than the heating rate A.

The holding time of the second set temperature in the second firing step is preferably 1 hour or more and 10 hours or less, and more preferably 1 hour or more and 5 hours or less, in terms of adjusting the above parameters of the lithium transition metal oxide to within the above predetermined ranges. The holding time of the second set temperature is the length of time during which the second set temperature is maintained after the second set temperature is reached.

In terms of adjusting the above parameters of the lithium transition metal oxide to within the above predetermined ranges, the oxygen stream used in the multi-step firing process is preferably such that, for example, the oxygen concentration in the oxygen stream is 60 % or higher, and the flow rate of the oxygen stream is in the range from 0.2 mL/min to 4 mL/min per 10 $cm^3$ of the firing furnace and 0.3 L/min or higher per 1 kg of the mixture. Further, the maximum pressure applied to the interior of the firing furnace is preferably in the range of 0.1 kPa or higher and 1.0 kPa or lower in addition to the pressure outside the firing furnace.

W or B may be included into the composite oxide (Z) by washing the composite oxide (Z) obtained in the above process with water, mixing therewith a W raw material or a B raw material, and heat-treating the mixture. Alternatively, W or B may be included into the composite oxide (Z) by mixing a W raw material or a B raw material with the composite oxide (Z) obtained in the above process, and then heat-treating the mixture. The heat treatment is, for example, performed in a vacuum, in an oxygen stream, or in atmospheric air at a temperature of 150 °C to 600 °C. Examples of the W raw material include tungsten oxide ($WO_3$) and lithium tungstate ($Li_2WO_4$, $Li_4WO_5$, $Li_6W_2O_9$). Examples of the B raw material include boric acid ($H_3BO_3$) and lithium borate ($Li_2B_4O_7$, $Li_3BO_3$, $LiB_3O_5$, $LiBO_2$).

[Negative Electrode]

The negative electrode 12 comprises a negative electrode core and a negative electrode mixture layer provided on a surface of the negative electrode core. As the negative electrode core, it is possible to use: a foil of a metal, such as copper, that is stable in the potential range of the negative electrode 12; a film having such a metal disposed on its surface layer; and the like. The negative electrode mixture layer contains a negative electrode active material and a binder, and is preferably provided on both sides of the negative electrode core in areas other than a portion where the negative electrode lead 21 is connected. The negative electrode 12 can be produced by, for example, applying a negative electrode mixture slurry containing the negative electrode active material, the binder, and the like onto the surfaces of the negative electrode core, drying the applied coating, and then compressing the coating to thereby form negative electrode mixture layers on both sides of the negative electrode core.

As the negative electrode active material, the negative electrode mixture layer contains, for example, a carbon-based active material that reversibly occludes and releases lithium ions. Preferred carbon-based active materials are natural graphite such as flake graphite, massive graphite, and earthy graphite, and artificial graphite such as massive artificial graphite (MAG) and graphitized mesophase carbon microbeads (MCMB). Further, as the negative electrode active material, a Si-based active material composed of at least one of Si and a Si-containing compound may be used, and a carbon-based active material and a Si-based active material may be used in combination.

As the binder contained in the negative electrode mixture layer, while it is possible to use fluororesins, PAN, polyimides, acrylic resins, polyolefins, and the like as in the case of the positive electrode 11, it is preferable to use styrene-butadiene rubber (SBR). Further, the negative electrode mixture layer preferably additionally contains CMC or a salt thereof, polyacrylic acid (PAA) or a salt thereof, polyvinyl alcohol (PVA), or the like. In particular, it is preferable to use SBR together with CMC or a salt thereof or PAA or a salt thereof.

The negative electrode 12 has a film (hereinafter may be referred to as "the negative electrode film") formed on the surface of the negative electrode mixture layer and containing Mo. It is considered that the negative electrode film is formed by deposition of Mo, which has eluted from within the composite oxide (Z) due to charging and discharging, onto the surface of the negative electrode mixture layer. That is, the negative electrode film contains Mo derived from the composite oxide (Z). The negative electrode film is formed by, for example, 10 cycles or less of charging and discharging. By using the composite oxide (Z) containing the predetermined amount of Mo and thereby forming, on the negative electrode surface, a good quality film containing Mo derived from the positive electrode, a decrease in capacity occurring in connection with charging and discharging is suppressed, and a good cycle characteristic is obtained. Presence of the negative electrode film can be confirmed by, for example, X-ray photoelectron spectroscopy (XPS).

The content of Mo in the negative electrode is 0.5 ppm to 120 ppm relative to the total mass of the lithium transition metal composite oxide in the positive electrode. When the Mo content is less than 0.5 ppm or more than 120 ppm, the effect of improving the charge-discharge cycle characteristic cannot be obtained. The Mo content in the negative electrode can be controlled by the composition of the composite oxide (Z), in particular by the firing conditions and the Mo content of the lithium transition metal composite oxide, and also by the charge/discharge conditions and the like. For example, when the end-of-charge voltage is increased and the depth of discharge is increased, the Mo content in the negative electrode tends to be increased.

The content of Mo in the negative electrode mixture layer and the film can be calculated by the following method. The content of Ni in the negative electrode, which will be described later, can also be calculated by a corresponding method.

(1) Add ion-exchanged water to the negative electrode 12, and detach the negative electrode mixture layer and the film from the negative electrode core.

(2) Add aqua regia and hydrofluoric acid to the detached negative electrode mixture layer and the film, heat and dissolve the mixture, and filter out insoluble matter such as carbon to thereby produce an aqueous solution. Add ion-exchanged water to this aqueous solution until a predetermined volume is reached. A result obtained by measuring the Mo concentration therein using an ICP-AES is used as the amount of Mo contained in the negative electrode.
(3) The amount of Mo contained in the negative electrode as measured in (2) is divided by the weight of the lithium transition metal composite oxide in the positive electrode, and the obtained result is used as the Mo content in the negative electrode.

The negative electrode film may further contain Ni. It is considered that Ni that has eluted from within the composite oxide (Z) due to charging and discharging is deposited on the surface of the negative electrode mixture layer together with Nb and M, and the negative electrode film is thereby formed. That is, the negative electrode film contains Ni derived from the composite oxide (Z).

In the negative electrode, the mass ratio of Mo content to Ni content (Mo/Ni) is preferably 0.5 to 20, and more preferably 2 to 18. When the Mo/Ni ratio is 0.5 to 20, the effect of improving the cycle characteristic can be enhanced. Further, when the Mo/Ni ratio is 2 to 18, the effect of improving the cycle characteristic can be further enhanced. The Mo/Ni can be controlled by the composition of the composite oxide (Z), the firing conditions of the lithium transition metal composite oxide, the charge/discharge conditions, and the like.

The negative electrode film may contain metal elements other than Mo and Ni. For example, when the composite oxide (Z) contains at least one of Al and Mn, the negative electrode film further contains the at least one of Al and Mn. Also, for example, when the composite oxide (Z) contains W, the negative electrode film further contains W. In addition to metal elements such as Mo and Ni, the negative electrode film may contain an organic substance that is a decomposition product of the electrolyte.

[Separator]

As the separator 13, a porous sheet having ion permeability and insulation property is used. Specific examples of the porous sheet include a microporous thin film, woven fabric, and non-woven fabric. As the material of the separator 13, polyolefins such as polyethylene and polypropylene, cellulose, and the like are suitable. The separator 13 may have either a single-layer structure or a laminated structure. A heat-resistant layer or the like may be formed on a surface of the separator.

EXAMPLES

While the present disclosure will be further described using Examples, the present disclosure is not limited to these Examples.

<Example 1>

[Synthesis of Lithium Transition Metal Composite Oxide (Positive Electrode Active Material)]

A composite oxide represented by general formula $Ni_{0.85}Mn_{0.15}O_2$, $Li_2MoO_4$, and lithium hydroxide monohydrate ($LiOH \cdot H_2O$) were mixed so that the molar ratio of the total amount of Ni, Mn, and Mo relative to Li was 1: 1.08. This mixture was put into a firing furnace, and was fired under an oxygen stream having an oxygen concentration of 95 % (with a flow rate of 2 mL/min per 10 cm$^3$ and 5 L/min per 1 kg of the mixture) at a heating rate of 2.0 °C/min from room temperature to 650 °C, and subsequently at a heating rate of 1 °C/min from 650 °C to 780 °C. The fired product was washed with water, and a lithium transition metal composite oxide was thereby obtained. As a result of analyzing the composition of the lithium transition metal composite oxide using an ICP-AES, the composition was $Li_{0.97}Ni_{0.84}Mo_{0.01}Mn_{0.15}O_2$.

[Production of Positive Electrode]

The above lithium transition metal composite oxide was used as the positive electrode active material. A positive electrode mixture slurry was prepared by mixing the positive electrode active material, acetylene black, and polyvinylidene fluoride (PVdF) at a solid content mass ratio of 95:3:2, adding thereto an appropriate amount of N-methyl-2-pyrrolidone (NMP), and then kneading the mixture. This positive electrode mixture slurry was applied to both sides of a positive electrode core made of aluminum foil, and the applied coating was dried and then rolled using a roller. The product was cut into a predetermined electrode size, and a positive electrode having positive electrode mixture layers formed on both sides of the positive electrode core was thereby obtained. At a part of the positive electrode, there was provided an exposed portion where a surface of the positive electrode core was exposed.

[Production of Negative Electrode]

As the negative electrode active material, natural graphite was used. A negative electrode mixture slurry was prepared by mixing the negative electrode active material, sodium carboxymethyl cellulose (CMC-Na), and styrene-butadiene rubber (SBR) in an aqueous solution at a solid content mass ratio of 100:1:1. This negative electrode mixture slurry was applied to both sides of a negative electrode core made of copper foil, and the applied coating was dried and then rolled using a roller. The product was cut into a predetermined electrode size, and a negative electrode having negative electrode mixture layers formed on both sides of the negative electrode core was thereby obtained. At a part of the negative electrode, there was provided an exposed portion where a surface of the negative electrode core was exposed.

[Preparation of Non-Aqueous Electrolyte]

Into a mixed solvent obtained by mixing ethylene carbonate (EC), methyl ethyl carbonate (MEC), and dimethyl carbonate (DMC) at a volume ratio of 3:3:4, lithium hexafluorophosphate ($LiPF_6$) was dissolved at a concentration of 1.2 mol/liter, and a non-aqueous electrolyte solution was thereby prepared.

[Production of Test Cell (Non-Aqueous Electrolyte Secondary Battery)]

An aluminum lead was attached to the exposed portion of the above-described positive electrode, and a nickel lead was attached to the exposed portion of the above-described negative electrode. The positive electrode and the negative electrode were spirally wound with a polyolefin separator disposed between these electrodes, and the product was shaped by being pressed in a radial direction to produce a flat-shaped spiral-type electrode assembly. This electrode assembly was housed in an outer casing composed of an aluminum laminate sheet, and after injecting the above-described non-aqueous electrolyte therein, the opening of the outer casing was sealed, and a test cell was thereby obtained.

[Evaluation of Capacity Retention Rate After Cycle Test]

In a temperature environment of 25 °C, the test cell was subjected to constant current charging at a constant current of 0.5 It until the battery voltage reached 4.2 V, and then subjected to constant voltage charging at 4.2 V until the current value reached 1/50 It. After that, constant current discharging was performed at a constant current of 0.5 It until the battery voltage reached 2.85 V. This charging and discharging cycle was repeated for 100 cycles. The discharge capacity in the first cycle and the discharge capacity in the 100th cycle were determined, and a capacity retention rate was calculated by the following formula.

$$\text{Capacity Retention Rate (\%)} = (\text{Discharge Capacity in the 100th cycle} \div \text{Discharge Capacity in the 1st Cycle}) \times 100$$

<Example 2>

A test cell was produced and performance evaluation was conducted in the same manner as in Example 1 except that, in the synthesis of the positive electrode active material, $Ni_{0.85}Mn_{0.15}O_2$, $Li_2MoO_4$, and $LiOH \cdot H_2O$ were mixed so that the molar ratio of the total amount of Ni, Mn, and Mo relative to Li was 1: 1.01, and the firing temperature was 750 °C.

<Example 3>

A test cell was produced and performance evaluation was conducted in the same manner as in Example 1 except that, in the synthesis of the positive electrode active material, $Ni_{0.85}Mn_{0.15}O_2$, $Li_2MoO_4$, and $LiOH \cdot H_2O$ were mixed so that the molar ratio of the total amount of Ni, Mn, and Mo relative to Li was 1:1.05.

<Example 4>

A test cell was produced and performance evaluation was conducted in the same manner as in Example 1 except that, in the synthesis of the positive electrode active material, a composite oxide represented by general formula $Ni_{0.91}Co_{0.04}Al_{0.05}O_2$, $Li_2MoO_4$, and $LiOH \cdot H_2O$ were mixed so that the molar ratio of the total amount of Ni, Co, Al, and Mo relative to Li was 1: 1.05, and the firing temperature was 720 °C.

<Example 5>

A test cell was produced and performance evaluation was conducted in the same manner as in Example 1 except that, in the synthesis of the positive electrode active material, a composite oxide represented by general formula $Ni_{0.94}Co_{0.06}O_2$, $Li_2MoO_4$, $Ti(OH)_4$, and $LiOH \cdot H_2O$ were mixed so that the molar ratio of the total amount of Ni, Co, Mo, and Ti relative to Li was 1: 1.05, and the firing temperature was 720 °C.

<Example 6>

A test cell was produced and performance evaluation was conducted in the same manner as in Example 1 except that, in the synthesis of the positive electrode active material, a composite oxide represented by general formula $Ni_{0.955}Al_{0.045}O_2$, $Li_2MoO_4$, NbzOs, and $LiOH \cdot H_2O$ were mixed so that the molar ratio of the total amount of Ni, Co, Mo, and Nb relative to Li was 1: 1.03, and this mixture was fired at a heating rate of 2.0 °C/min from room temperature to 600 °C and subsequently at a heating rate of 0.5 °C/min from 600 °C to 700 °C.

<Example 7>

A test cell was produced and performance evaluation was conducted in the same manner as in Example 1 except that, in the synthesis of the positive electrode active material, a composite oxide represented by general formula $Ni_{0.955}Al_{0.045}O_2$, $Li_2MoO_4$, $Ca(OH)_2$, and $LiOH \cdot H_2O$ were mixed so that the molar ratio of the total amount of Ni, Co, Mo, and Ca relative to Li was 1: 1.03, and this mixture was fired at a heating rate of 2.0 °C/min from room temperature to 600 °C and subsequently at a heating rate of 0.5 °C/min from 600 °C to 700 °C.

<Comparative Example 1>

A test cell was produced in the same manner as in Example 1 except that, in the synthesis of the positive electrode active material, a composite oxide represented by general formula $Ni_{0.85}Mn_{0.15}O_2$, $Li_2MoO_4$, and $LiOH \cdot H_2O$ were mixed so that the molar ratio of the total amount of Ni, Mn, and Mo relative to Li was 1: 1.12, and this mixture was fired at a heating rate of 6.0 °C/min from room temperature to 600 °C and subsequently at a heating rate of 3 °C/min from 600 °C to 730 °C.

<Comparative Example 2>

A test cell was produced and performance evaluation was conducted in the same manner as in Example 1 except that, in the synthesis of the positive electrode active material, a composite oxide represented by general formula $Ni_{0.85}Mn_{0.15}O_2$ and $LiOH \cdot H_2O$ were mixed so that the molar ratio of the total amount of Ni and Mn relative to Li was 1:1.08.

<Comparative Example 3>

A test cell was produced and performance evaluation was conducted in the same manner as in Example 1 except that, in the synthesis of the positive electrode active material, a composite oxide represented by general formula $Ni_{0.91}Co_{0.04}Al_{0.05}O_2$, $Li_2MoO_4$, and $LiOH \cdot H_2O$ were mixed so that the molar ratio of the total amount of Ni, Co, Al, and Mo relative to Li was 1:1.05, and the firing temperature was 730 °C.

<Comparative Example 4>

A test cell was produced and performance evaluation was conducted in the same manner as in Example 1 except that, in the synthesis of the positive electrode active material, a composite oxide represented by general formula $Ni_{0.89}Co_{0.06}Al_{0.05}O_2$, $Li_2MoO_4$, and $LiOH \cdot H_2O$ were mixed so that the molar ratio of the total amount of Ni, Co, Al, and Mo relative to Li was 1:1.05, and this mixture was fired at a heating rate of 2.0 °C/min from room temperature to 600 °C and subsequently at a heating rate of 3 °C/min from 600 °C to 800 °C.

<Comparative Example 5>

A test cell was produced in the same manner as in Example 1 except that, in the synthesis of the positive electrode active material, a composite oxide represented by general formula $Ni_{0.94}Co_{0.01}Al_{0.05}O_2$ and $LiOH \cdot H_2O$ were mixed so that the molar ratio of the total amount of Ni, Co, and Al relative to Li was 1:1.02.

The capacity retention rate of each of the Examples and Comparative Examples is shown in Table 1. Table 1 also shows the composition and characteristics of the positive electrode active material, and the Mo content and Mo/Ni ratio in the negative electrode. The Mo content and Mo/Ni ratio in the negative electrode were determined by making measurements in the negative electrode taken out by disassembling the test cell after the cycle test. It was confirmed by XPS that, in the negative electrodes of all of Examples 1 to 7, a negative electrode film was formed on the surface of the negative electrode mixture layer.

[Table 1]

| | Positive Electrode Active Material | | | | | Negative Electrode | | Evaluation Result |
|---|---|---|---|---|---|---|---|---|
| | Composition | | | Characteristics | | | | |
| | Ni [mol%] | Mo [mol%] | Other Components [Element mol%] | Crystallite Size [Å] | BET Specific Surface Area [m²/g] | Mo Content [ppm] | Mo/Ni | Capacity Retention Rate [%] |
| Example 1 | 84.0 | 1.0 | Mn 15.0 | 471 | 2.57 | 12 | 2.93 | 93.5 |
| Example 2 | 84.9 | 0.1 | Mn 15.0 | 272 | 1.64 | 1.0 | 1.01 | 91.7 |
| Example 3 | 85.0 | 0.5 | Mn 14.0 Zr 0.5 | 388 | 2.49 | 5.2 | 0.97 | 91.6 |
| Example 4 | 90.0 | 1.0 | Co 4.0 Al 5.0 | 537 | 2.67 | 9.5 | 1.67 | 91.5 |
| Example 5 | 90.0 | 1.0 | Co 6.0 Ti 3.0 | 499 | 3.78 | 28 | 3.21 | 93.1 |
| Example 6 | 94.0 | 1.0 | Al 4.5 Nb 0.5 | 599 | 4.13 | 103 | 18.2 | 90.2 |
| Example 7 | 94.0 | 1.0 | Al 4.5 Ca 0.5 | 719 | 3.21 | 87 | 15.9 | 92.1 |
| Comparative Example 1 | 84.5 | 0.5 | Mn 15.0 | 421 | 1.80 | 136 | 17.4 | 77.5 |
| Comparative Example 2 | 85.0 | - | Mn 15.0 | 435 | 2.03 | - | - | 88.3 |
| Comparative Example 3 | 88.0 | 3.0 | Co 4.0 Al 5.0 | 323 | 5.53 | 35 | 6.3 | 84.2 |
| Comparative Example 4 | 88.9 | 0.1 | Co 6.0 Al 5.0 | 748 | 1.06 | 0.4 | 0.04 | 87.3 |
| Comparative Example 5 | 94.0 | - | Co 1.0 Al 5.0 | 835 | 0.88 | - | - | 84.3 |

As shown in Table 1, compared to the test cells of the Comparative Examples, all of the test cells of the Examples had a higher capacity retention rate after the cycle test, and a superior charge-discharge cycle characteristic. In the test cells of the Examples, a positive electrode active material containing Mo at a ratio of less than 3 mol% was used, and the negative electrode surface had formed thereon a film containing, at a ratio of 0.5 ppm to 120 ppm, Mo derived from the positive electrode active material. In contrast, in the test cells of Comparative Examples 2 and 5, the positive electrode active material did not contain Mo, and no film containing Mo was present on the negative electrode surface. In the test cell of Comparative Example 4, although the positive electrode active material contained Mo, the film containing Mo was not sufficiently formed on the negative electrode surface. Regarding the test cell of Comparative Example 3, it is considered that the Mo content in the positive electrode active material was too high, and as a result, formation of the layered structure of the positive electrode active material was inhibited, and the structure therefore became unstable. Further, in the test cell of Comparative Example 1, it is considered that the Mo content in the negative electrode was too high, and as a result, too much film was formed, and resistance was therefore increased. As such, the battery charge-discharge cycle characteristic is significantly improved by a positive electrode active material containing a predetermined amount of Mo, and a negative electrode film containing a predetermined amount of Mo derived from the positive electrode active material.

REFERENCE SIGNS LIST

10 secondary battery; 11 positive electrode; 12 negative electrode; 13 separator; 14 electrode assembly; 16 outer can; 17 sealing assembly; 18, 19 insulation plate; 20 positive electrode lead; 21 negative electrode lead; 22 grooved portion; 23 internal terminal plate; 24 lower valve member; 25 insulation member; 26 upper valve member; 27 cap; 28 gasket.

**Claims**

1. A non-aqueous electrolyte secondary battery comprising a positive electrode, a negative electrode, and a non-aqueous electrolyte, wherein

   the positive electrode contains a lithium transition metal composite oxide having a layered structure and containing at least Ni and Mo;
   in the lithium transition metal composite oxide,

   a content of Ni is 80 mol% to 95 mol% relative to a total number of moles of metal elements excluding Li, and
   a content of Mo is less than 3 mol% relative to the total number of moles of metal elements excluding Li;

   the negative electrode includes a negative electrode mixture layer containing a negative electrode active material, and a film formed on a surface of the negative electrode mixture layer and containing Mo; and
   a content of Mo in the negative electrode is 0.5 ppm to 120 ppm relative to a total mass of the lithium transition metal composite oxide in the positive electrode.

2. The non-aqueous electrolyte secondary battery according to claim 1, wherein the film further contains Ni.

3. The non-aqueous electrolyte secondary battery according to claim 2, wherein a mass ratio of the content of Mo to a content of Ni (Mo/Ni) in the negative electrode is 0.5 to 20.

4. The non-aqueous electrolyte secondary battery according to claim 2, wherein a mass ratio of the content of Mo to a content of Ni (Mo/Ni) in the negative electrode is 2 to 18.

5. The non-aqueous electrolyte secondary battery according to any one of claims 1 to 4, wherein

   the lithium transition metal composite oxide further contains at least one of Al and Mn, and
   the film further contains the at least one of Al and Mn.

6. The non-aqueous electrolyte secondary battery according to any one of claims 1 to 5, wherein a crystallite size of the lithium transition metal composite oxide, which is calculated by the Scherrer equation from a half width of a diffraction peak of a (104) plane in an X-ray diffraction pattern obtained by X-ray diffraction, is in a range from 250 Å to 800 Å.

7. The non-aqueous electrolyte secondary battery according to any one of claims 1 to 6, wherein a BET specific surface area of the lithium transition metal composite oxide is in a range from 1 $m^2$/g to 5 $m^2$/g.

# Figure 1

## INTERNATIONAL SEARCH REPORT

| International application No. |
|---|
| **PCT/JP2021/044687** |

| A. | CLASSIFICATION OF SUBJECT MATTER |
|---|---|

*H01M 4/131*(2010.01)i; *H01M 4/525*(2010.01)i; *H01M 10/052*(2010.01)i
FI:   H01M4/131; H01M4/525; H01M10/052

According to International Patent Classification (IPC) or to both national classification and IPC

| B. | FIELDS SEARCHED |
|---|---|

Minimum documentation searched (classification system followed by classification symbols)

H01M4/131; H01M4/525; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2006-344567 A (SUMITOMO METAL MINING CO LTD) 21 December 2006 (2006-12-21) | 1-7 |
| A | CN 111211320 A (EAST CHINA UNIVERSITY OF SCIENCE AND TECHNOLOGY) 29 May 2020 (2020-05-29) | 1-7 |
| A | KR 10-2018-0067494 A (POSCO) 20 June 2018 (2018-06-20) | 1-7 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 January 2022** | **18 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/044687**

| Patent document cited in search report | | | Publication date (day/month/year) | Patent family member(s) | Publication date (day/month/year) |
|---|---|---|---|---|---|
| JP | 2006-344567 | A | 21 December 2006 | (Family: none) | |
| CN | 111211320 | A | 29 May 2020 | (Family: none) | |
| KR | 10-2018-0067494 | A | 20 June 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006310181 A